# FASCICULE DE BREVET EUROPEEN

(11) **EP 1 515 120 B1**
(45) Date de publication et mention de la délivrance du brevet: **02.08.2006**
(21) Numéro de dépôt: 04292122.1
(22) Date de dépôt: 02.09.2004
(51) Int. Cl.: G01C 19/56

(54) **Dispositif de mesure mécanique d'un organe vibrant, et gyroscope en faisant application**
Mechanische Messvorrichtung mit einem Schwingungselement und ihre Verwendung in einem Gyroskop
Mechanical measuring device comprising a vibrating element and a gyroscope using same

(30) Priorité: 09.09.2003 FR 0310598
(43) Date de publication de la demande: 16.03.2005
(73) Titulaire: SAGEM Défense Sécurité, 75015 Paris (FR)
(72) Inventeur: Beita, José, 95390 Saint Prix (FR); Guyomar, Daniel, 06200 Nice (FR); Eyraud, Lucien, 69005 Lyon (FR); Richard, Claude, 69003 Lyon (FR); Lebrun, Laurent, 69600 Villeurbanne (FR); Guiffard, Benoit, 69680 Chassieu (FR); Boucher, Eric, 69007 Lyon (FR); Audigier, David, 38230 Charvieu (FR)
(74) Mandataire: Bérogin, Francis

(56) Documents cités:
- EP-A- 0 649 002
- FR-A- 2 692 349

## Description

La présente invention concerne des perfectionnements apportés aux dispositifs de mesure mécanique d'un organe vibrant, comprenant un capteur piézoélectrique en céramique PZT qui est solidarisé audit organe vibrant et qui est inclus dans un circuit électronique de mesure du signal délivré par ledit capteur piézoélectrique.

De tels dispositifs sont connus des documents FR-A-2 692 349 et EP-A-0 649 002.

Par PZT, on désigne les matériaux perovskites de type zirconotitanate de plomb ZrO₃ - Pb Ti, appartenant au groupe des matériaux ferroélectriques et dont l'utilisation pour constituer des capteurs piézoélectriques est connue.

Les matériaux piézoélectriques se caractérisent, entre autres, par un coefficient d₃₁ dit "coefficient piézoélectrique" représentatif de la variation dimensionnelle relative du matériau piézoélectrique en présence d'une variation d'un champ électrique transversal. Une valeur élevée du coefficient d₃₁ traduira une sensibilité élevée du matériau piézoélectrique, c'est-à-dire une aptitude à une variation dimensionnelle importante en présence d'une variation donnée du champ électrique transversal.

Les matériaux piézoélectriques sont classiquement classés en trois catégories en fonction de leur facteur de qualité Q :
- pour les matériaux piézoélectriques dits "doux", le facteur de qualité Q a une valeur de l'ordre de 60, tandis que le coefficient piézoélectrique d₃₁ a une valeur élevée de l'ordre de 250 ;
- pour les matériaux piézoélectriques dits "semi-durs", le facteur de qualité Q a une valeur de l'ordre de 500 à 1000, tandis que le coefficient piézoélectrique d₃₁ a une valeur moyenne de l'ordre de 100 ;
- pour les matériaux piézoélectriques dits "durs", le facteur de qualité Q a une valeur de l'ordre de 2500, tandis que le coefficient piézoélectrique d₃₁ a une valeur faible de l'ordre de 50.

Autrement dit, les matériaux piézoélectriques ayant un bon facteur de qualité Q ont un mauvais coefficient piézoélectrique d₃₁, et inversement.

Actuellement, pour les applications de type senseurs inertiels, gyromètre ou gyroscope, ..., les matériaux piézoélectriques semi-durs, dont font partie les matériaux ferroélectriques du type perovskite, sont plus favorablement utilisés en raison de leurs performances moyennes pour ce qui concerne à la fois le facteur de qualité Q et le coefficient piézoélectrique d₃₁ (les matériaux doux étant écartés en raison de leur facteur de qualité insuffisant et les matériaux durs étant écartés en raison de leur coefficient piézoélectrique trop faible).

De ce fait, le choix de matériaux semi-durs fait que la sensibilité de ces matériaux est, elle aussi, moyenne.

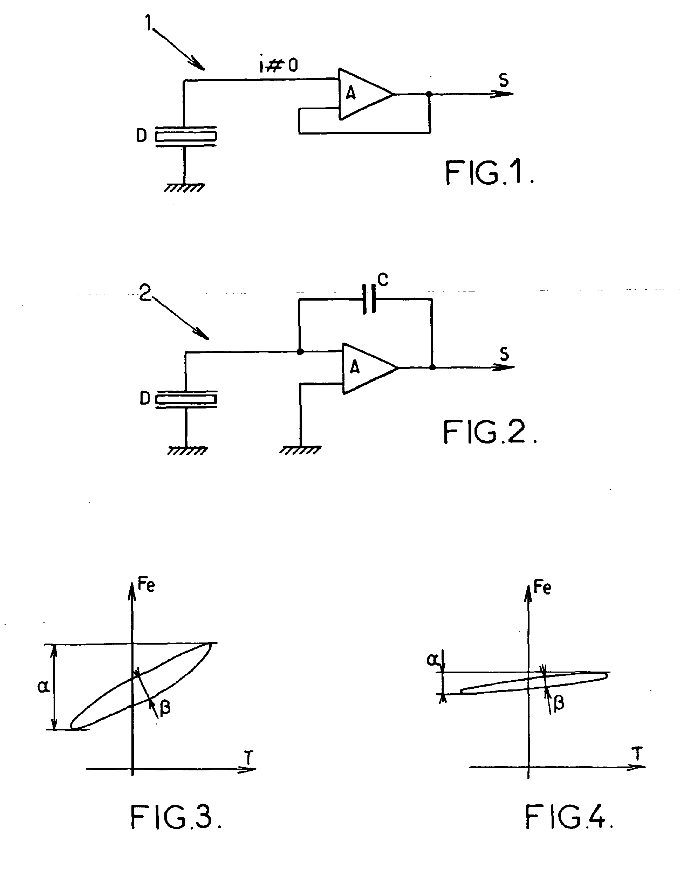

Pour mesurer la déformation d'un organe vibrant par détection du signal délivré par un capteur piézoélectrique qui en est solidaire, il est connu que le circuit de mesure associé à ce capteur peut être de l'un des deux types suivants :
- circuit 1 à haute impédance d'entrée illustré à la figure 1 du dessin annexé : ce circuit 1 comprend un amplificateur A dont une entrée est raccordée à l'électrode d'une face de la pastille piézoélectrique D, l'électrode de la face opposée de cette pastille étant connectée à la masse ; l'autre entrée de l'amplificateur est raccordée directement à la sortie de celui-ci ; le circuit 1 constitue un détecteur de tension à haute impédance, avec un courant sensiblement nul, dont la tension de sortie S est sensiblement une recopie de la tension d'entrée (montage suiveur de gain unitaire) ;
- circuit 2 à basse impédance d'entrée illustré à la figure 2 du dessin annexé : ce circuit comprend un amplificateur A dont une entrée est raccordée à l'électrode d'une face de la pastille piézoélectrique D, l'électrode de la face opposée de cette pastille étant connectée à la masse ; un condensateur C est connecté entre cette entrée et la sortie de l'amplificateur A ; l'autre entrée de l'amplificateur A est raccordée à la masse ; ce circuit à basse impédance d'entrée à amplificateur de charge transforme en tension le courant délivré par la pastille piézoélectrique D ; celle-ci est court-circuitée sur elle-même par le condensateur C et le champ électrique à ses bornes est nul.

D'après ce qui précède, on comprend que, dans les dispositifs actuels de mesure mécanique d'un organe vibrant par capteur piézoélectrique, le choix du matériau piézoélectrique, d'une part, et le choix du circuit de mesure du signal délivré par le capteur piézoélectrique, d'autre part, sont des choix de compromis.

Or les utilisateurs des appareils qui mettent en oeuvre de tels dispositifs de mesure mécanique d'organe vibrant (par exemple gyromètres) ont des exigences toujours plus sévères pour ce qui concerne les performances, exigences qu'il n'est plus possible de satisfaire avec les moyens actuellement mis en oeuvre.

C'est donc dans ce contexte que l'invention vise à proposer des moyens perfectionnés écartant les inconvénients exposés plus haut et propres à donner satisfaction aux exigences plus contraignantes de la pratique.

A cette fin un dispositif de mesure mécanique tel que mentionné au préambule se caractérise, étant agencé conformément à l'invention, en ce que la céramique PZT est dopée avec du fluor
et en ce que le circuit électronique de mesure du signal délivré par le capteur piézoélectrique est un circuit à haute impédance d'entrée.

Certes les matériaux perovskites dopés au fluor sont déjà connus. Le document FR-A-2 248 587 décrit des matériaux de ce type utilisés dans la fabrication de condensateurs. Le document EP-A-0 731 060 décrit un procédé de fabrication de céramiques PZT aux fins d'utilisation dans des transducteurs émettant des ondes acoustiques. Les documents FR-A-2 731 443 et US-A-5 683 613 décrivent des procédés de fabrication de céramiques piézoélectriques fluorées.

Toutefois, le fait d'utiliser une céramique PZT fluorée pour constituer un capteur piézoélectrique, dont un exemple est un gyroscope vibrant piézoélectrique, n'aurait en soi qu'un effet bénéfique restreint dans l'amélioration des performances du dispositif de mesure mécanique s'il n'était exploité en conjonction avec un circuit de mesure à haute impédance d'entrée.

En effet le dopage de la céramique PZT avec du fluor conduit à un meilleur facteur de qualité Q et donc une meilleure stabilité de dérive de l'appareil, et améliore l'hystérésis en température et sous contrainte du facteur d'échelle.

Il faut noter ici que le facteur d'échelle Fe n'est pas stable en température, d'une part, et que cette variation en température s'accompagne d'un phénomène d'hystérésis, d'autre part. La figure 3 illustre l'allure de la courbe de variation, sur un cycle fermé de variation de température, du facteur d'échelle Fe (en ordonnées) en fonction de la température T (en abscisses) pour une céramique PZT classique. On a désigné par α l'amplitude de variation du facteur d'échelle Fe entre ses valeurs maximale et minimale et par β l'écart maximum dû à l'hystérésis.

Or, des mesures comparatives effectuées sur les circuits à haute et basse impédance d'entrée montrent que l'écart relatif moyen (Feₘₐₓ - Feₘᵢₙ) /Fe_{moyen} est, aussi bien dans le cas de l'écart α que dans le cas de l'écart β, très inférieur pour le circuit à haute impédance d'entrée à ce qu'il est pour le circuit à basse impédance d'entrée. Ainsi, grâce à l'emploi d'une céramique PZT dopée au fluor, on obtient, comme illustré à la figure 4, une courbe de variation thermique du facteur d'échelle Fe qui présente une bien moins grande amplitude α et un écart hystérétique β bien moindre.

De ce fait, la combinaison des deux dispositions précitées, conformément à l'invention, conduit simultanément à une amélioration du facteur de qualité Q et à une plus grande stabilité en température du facteur d'échelle Fe.

On soulignera ici que le fait de doper une céramique PZT avec du fluor correspond à un durcissement du matériau : l'amélioration du facteur de qualité Q s'accompagne d'un affaiblissement du coefficient piézoélectrique d₃₁, entraînant une diminution du facteur d'échelle Fe (perte d'efficacité, le facteur d'échelle étant proportionnel au carré du coefficient piézoélectrique d₃₁ : Fe = k/d). Cette perte d'efficacité peut être acceptable en regard des avantages procurés par une amélioration de la stabilité du facteur d'échelle en température.

Cependant, pour éviter un durcissement trop important du matériau, on prévoit de préférence de limiter le dopage de la céramique PZT à un pourcentage molaire de fluor inférieur à 2 %.

De façon très avantageuse, on peut envisager de contrecarrer, au moins en partie, l'effet de durcissement dû au dopage au fluor en mettant en oeuvre un dopage supplémentaire avec un ou plusieurs ions de substitution en sites A ou B dont la valence et l'encombrement sont compatibles avec l'équilibre du réseau perovskite. L'introduction de ces ions de substitution a un effet adoucissant, avec de préférence un pourcentage molaire inférieur à 3 % de façon à limiter l'effet d'adoucissement introduit par ce dopage supplémentaire. Grâce à cela, le dispositif de mesure présente un facteur d'échelle ayant en outre une stabilité temporelle améliorée.

De préférence, la céramique PZT est dopée avec un ou plusieurs ions de substitution en site B dont la valence est inférieure à 4 et l'encombrement compatible avec l'équilibre du réseau perovskite. En pratique, l'ion de substitution en site B pourra être du manganèse.

En pratique, les meilleurs résultats sont obtenus avec une céramique PZT doublement dopée au fluor à raison de 0,5 % à 2 % et au manganèse à raison de 0,5 % à 1,5 %, de préférence doublement dopée avec environ 1 % de fluor et environ 1 % de manganèse.

Ainsi, la mise en oeuvre des dispositions conformes à l'invention conduit à un matériau piézoélectrique à caractéristiques optimisées, combinant à la fois un facteur de qualité Q relativement élevé (typiquement de l'ordre de 1000) et un coefficient piézoélectrique d₃₁ accru (typiquement de l'ordre de 150 pC/N), tous deux meilleurs que ceux des matériaux semi-durs employés jusqu'à présent. Grâce à ce choix de matériau, on obtient un facteur d'échelle Fe plus grand, et donc une meilleure efficacité du capteur.

Simultanément le choix d'un circuit de mesure du signal piézoélectrique avec une haute impédance d'entrée conduit à une plus grande stabilité en température du facteur d'échelle Fe (moindre amplitude de variation en température, moindre écart hystérétique).

La combinaison des dispositions retenues conformément à l'invention permet donc de constituer un dispositif de mesure mécanique des déformations d'un corps vibrant qui s'avère beaucoup plus performant (à la fois plus efficace et plus stable en température) que les dispositifs antérieurs et répondent ainsi mieux aux aspirations des utilisateurs.

Un dispositif de mesure mécanique conforme à la présente invention trouve une application particulièrement importante (bien que non exclusive) dans les gyromètres, et en particulier dans les gyromètres à poutre(s) vibrante(s) par exemple du type décrit dans les documents FR-A-2 692 349 et FR-A-2 812 386, ces gyromètres ayant au moins une poutre métallique vibrante encastrée, des premiers éléments piézoélectriques solidarisés à la poutre et excités par un circuit d'excitation pour maintenir la poutre en vibration dans une direction prédéterminée et des seconds éléments piézoélectriques solidarisés à la poutre et formant capteurs piézoélectriques pour détecter la vibration de la poutre dans une direction perpendiculaire à la susdite direction déterminée, chaque capteur piézoélectrique étant relié à un circuit de mesure de son signal de sortie pour former un dispositif de mesure mécanique.

## Revendications

1. Dispositif de mesure mécanique d'un organe vibrant, comprenant un capteur piézoélectrique en céramique PZT qui est solidarisé audit organe vibrant et qui est inclus dans un circuit électronique de mesure du signal délivré par ledit capteur piézoélectrique,
**caractérisé en ce que** la céramique PZT est dopée avec du fluor
et **en ce que** le circuit électronique de mesure du signal délivré par le capteur piézoélectrique est un circuit (1) à haute impédance d'entrée,
ce grâce à quoi le dispositif de mesure présente un facteur d'échelle ayant une stabilité en température améliorée.

2. Dispositif de mesure selon la revendication 1, **caractérisé en ce que** la céramique PZT est dopée avec un pourcentage molaire de fluor inférieur à 2 %.

3. Dispositif de mesure selon la revendication 1 ou 2, **caractérisé en ce que** la céramique PZT est en outre dopée avec un ou plusieurs ions de substitution en sites A ou B dont la valence et l'encombrement sont compatibles avec l'équilibre du réseau perovskite,
ce grâce à quoi le dispositif de mesure présente un facteur d'échelle ayant en outre une stabilité temporelle améliorée.

4. Dispositif de mesure selon la revendication 3, **caractérisé en ce que** la céramique PZT est dopée avec un ou plusieurs ions de substitution en site B dont la valence est inférieure à 4 et l'encombrement compatible avec l'équilibre du réseau perovskite.

5. Dispositif de mesure selon la revendication 3 ou 4, **caractérisé en ce que** l'ion de substitution du site B est du manganèse.

6. Dispositif de mesure selon les revendications 2 et 5, **caractérisé en ce que** la céramique PZT est dopée avec des pourcentages molaires de
fluor : de 0,5 à 2 %, et de
manganèse : de 0,5 à 1,5 %

7. Dispositif de mesure selon la revendication 6, **caractérisé en ce que** la céramique PZT est dopée avec environ 1 % de fluor et environ 1 % de manganèse.

8. Gyromètre ayant au moins une poutre métallique vibrante encastrée, des premiers éléments piézoélectriques solidarisés à la poutre et excités par un circuit d'excitation pour maintenir la poutre en vibration dans une direction prédéterminée et des seconds éléments piézoélectriques solidarisés à la poutre et formant capteurs piézoélectriques pour détecter la vibration de la poutre dans une direction perpendiculaire à la susdite direction déterminée, chaque capteur piézoélectrique étant relié à un circuit de mesure de son signal de sortie pour former un dispositif de mesure mécanique, **caractérisé en ce que** chaque dispositif de mesure mécanique est constitué selon l'une quelconque des revendications 1 à 7.

## Claims

1. Mechanical device for measuring a vibrating member, comprising a piezoelectric sensor of PZT ceramic material which is fixedly joined to the vibrating member and which is included in an electronic circuit for measuring the signal transmitted by the piezoelectric sensor,
**characterised in that** the PZT ceramic material is doped with fluorine
and **in that** the electronic circuit for measuring the signal transmitted by the piezoelectric sensor is a high-impedance input circuit (1),
by means of which the measuring device has a graduation factor having improved temperature stability.

2. Measuring device according to claim 1, **characterised in that** the PZT ceramic material is doped with a molar percentage of fluorine of less than 2%.

3. Measuring device according to claim 1 or 2,
**characterised in that** the PZT ceramic material is further doped with one or more substitution ions at sites A or B, whose valency and size are compatible with the equilibrium of the perovskite network,
by means of which the measuring device has a graduation factor further having improved temporal stability.

4. Measuring device according to claim 3, **characterised in that** the PZT ceramic material is doped with one or more substitution ions at site B, whose valency is less than 4 and size is compatible with the equilibrium of the perovskite network.

5. Measuring device according to claim 3 or 4,
**characterised in that** the substitution ion of the site B is manganese.

6. Measuring device according to claims 2 and 5,
**characterised in that** the PZT ceramic material is doped with molar percentages of
fluorine: from 0.5 to 2% and
manganese: from 0.5 to 1.5%.

7. Measuring device according to claim 6, **characterised in that** the PZT ceramic material is doped with approximately 1% of fluorine and approximately 1% of manganese.

8. Gyrometer having at least one embedded vibrating metal beam, first piezoelectric elements which are fixedly joined to the beam and which are excited by an excitation circuit in order to keep the beam vibrating in a predetermined direction and second piezoelectric elements which are fixedly joined to the beam and which form piezoelectric sensors in order to detect the vibration of the beam in a direction perpendicular to the above-mentioned predetermined direction, each piezoelectric sensor being connected to a circuit for measuring the output signal thereof in order to form a mechanical measuring device, **characterised in that** each mechanical measuring device is constituted in accordance with any one of claims 1 to 7.

## Patentansprüche

1. Mechanische Messvorrichtung eines Schwingungselements, mit einem piezoelektrischen Sensor aus PZT-Keramik, der mit dem Schwingungselement fest verbunden ist und in einer elektronischen Schaltung zum Messen des von dem piezoelektrischen Sensor abgegebenen Signals enthalten ist,
**dadurch gekennzeichnet, dass** die PZT-Keramik mit Fluor dotiert ist,
und dass die elektronische Schaltung zum Messen des von dem piezoelektrischen Sensor abgegebenen Signals eine Schaltung mit hoher Eingangsimpedanz ist, wodurch die Messvorrichtung einen Maßstabfaktor aufweist, der eine verbesserte Temperaturbeständigkeit hat.

2. Messvorrichtung nach Anspruch 1,
**dadurch gekennzeichnet, dass** die PZT-Keramik mit einem Molgehalt an Fluor von unter 2 % dotiert ist.

3. Messvorrichtung nach Anspruch 1 oder 2,
**dadurch gekennzeichnet, dass** die PZT-Keramik ferner mit einem oder mehreren Substitutionsionen in Position A oder B dotiert ist, deren Wertigkeit und deren Größe mit dem Gleichgewicht des Perowskit-Gitters kompatibel sind,
wodurch die Messvorrichtung einen Maßstabfaktor aufweist, der zudem eine verbesserte Zeitbeständigkeit hat.

4. Messvorrichtung nach Anspruch 3,
**dadurch gekennzeichnet, dass** die PZT-Keramik mit einem oder mehreren Substitutionsionen in Position B dotiert ist, deren Wertigkeit kleiner als 4 ist und deren Größe mit dem Gleichgewicht des Perowskit-Gitters kompatibel ist.

5. Messvorrichtung nach Anspruch 3 oder 4,
**dadurch gekennzeichnet, dass** das Substitutionsion der Position B Mangan ist.

6. Messvorrichtung nach den Ansprüchen 2 und 5,
**dadurch gekennzeichnet, dass** die PZT-Keramik mit einem Molgehalt an
Fluor von 0,5 bis 2 % und an
Mangan von 0,5 bis 1,5 %
dotiert ist.

7. Messvorrichtung nach Anspruch 6,
**dadurch gekennzeichnet, dass** die PZT-Keramik mit etwa 1 % Fluor und etwa 1 % Mangan dotiert ist.

8. Gyrometer mit wenigstens einem eingebauten schwingenden Metallträger, ersten piezoelektrischen Elementen, die mit dem Träger fest verbunden sind und durch einen Erregerkreis erregt werden, um den Träger in einer vorbestimmten Richtung in Schwingung zu halten, und zweiten piezoelektrischen Elementen, die mit dem Träger fest verbunden sind und piezoelektrische Sensoren bilden, um die Schwingung des Trägers in einer Richtung senkrecht zu der oben genannten bestimmten Richtung zu erfassen, wobei jeder piezoelektrischer Sensor mit einer Schaltung zum Messen seines Ausgangssignals verbunden ist, um eine mechanische Messvorrichtung zu bilden,
**dadurch gekennzeichnet, dass** jede mechanische Messvorrichtung nach einem der Ansprüche 1 bis 7 gebildet ist.
